# EUROPEAN PATENT APPLICATION

(11) **EP 1 060 663 A1**
(43) Date of publication of application: **20.12.2000**
(21) Application number: 99111601.3
(22) Date of filing: 15.06.1999
(51) Int. Cl.: A01K 63/00

(54) **Combination aquarium**

(71) Applicant: Chen, Han Lin, Nei Hu Chu, Taipei (TW)
(72) Inventor: Chen, Han Lin, Nei Hu Chu, Taipei (TW)
(74) Representative: Goddar, Heinz J., Dr.

(57) **Abstract**

A combination aquarium formed by connecting a plurality of hollow boxes vertically and horizontally together, the hollow boxes each having two coupling elements (11,11';21,21';13,13';23,23') bilaterally disposed at one lateral side, two coupling holes (111,111';211,211';131,131';231,231') bilaterally disposed at an opposite lateral side, two bumpers (15) arranged in parallel at a front side, a top coupling groove (16,26), a bottom coupling flange (17), at least two notches (19,29) at two opposite lateral sides for enabling water to flow from one hollow box to another, and cap means (18,28) for closing on the notches (19,29) to stop water from passing through, wherein the rectangular hollow boxes are vertically connected in a stack by engaging the bottom coupling flange (17) of one rectangular hollow box into the top coupling groove (16,26) of another, or horizontally connected in a line by engaging the coupling elements of one rectangular hollow box into the coupling holes of another.

## Description

### BACKGROUND OF THE INVENTION

The present invention relates to a combination aquarium for keeping living fish, water animals and plants, and more particularly to such a combination aquarium which is comprised of a plurality of individual hollow boxes so made that can be connected vertically in a stack, or horizontally in a line.

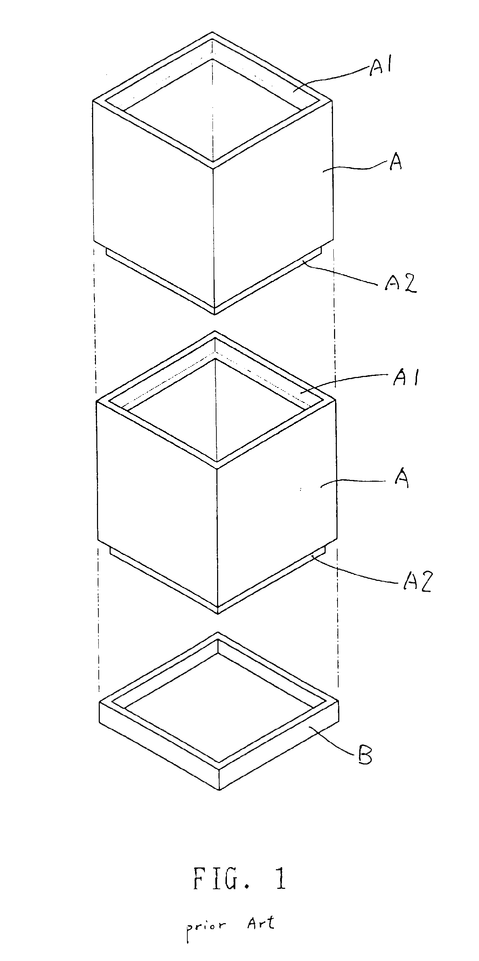

Figure 1 shows a combination aquarium according to the prior art. This combination aquarium comprises a plurality of hollow boxes **A**, and a bottom cover plate **B**. The boxes **A** each have a top coupling groove **A1**, and a bottom coupling flange **A2**. By engaging the bottom coupling flange **A2** at one box A into the top coupling groove **A1** at another, the boxes **A** are vertically connected in a stack. This design enables the boxes **A** to be vertically connected in a stack, however it does not allow the boxes **A** to be horizontally connected in a line. Further, when an apparatus is mounted in the boxes **A**, a gap is left between the apparatus and the peripheral wall of the box **A**, and living fish or water animals may be jammed to death in the gap.

### SUMMARY OF THE INVENTION

The present invention provides a combination aquarium which eliminates the aforesaid drawbacks. According to one aspect of the present invention, the combination aquarium is formed by connecting a plurality of hollow boxes vertically and horizontally together, the hollow boxes each having two coupling elements bilaterally disposed at one lateral side, two coupling holes bilaterally disposed at an opposite lateral side, a top coupling groove, and a bottom coupling flange, wherein the rectangular hollow boxes are vertically connected in a stack by engaging the bottom coupling flange at one rectangular hollow box into the top coupling groove at another, or horizontally connected in a line by engaging the coupling elements at one rectangular hollow box into the coupling holes at another. According to another aspect of the present invention, the boxes each have at least two notches at two opposite lateral sides for enabling water to flow from one hollow box to another when the boxes are horizontally connected in a line, and cap means for closing on the notches to stop water from passing through. According to still another aspect of the present invention, two bumpers arranged in parallel at a front side for the installation of apparatus used in the combination aquarium. According to still another aspect of the present invention, the coupling elements can be hooked blocks or round head bolts fitting the coupling holes.

### BRIEF DESCRIPTION OF THE DRAWINGS

Figure 1 is an exploded view of a combination aquarium according to the prior art.

Figure 2A is an exploded view of a combination aquarium according to the present invention.

Figure 2B is an enlarged view of a part of Figure 2A.

Figure 3A shows the connection of the rectangular hollow boxes in vertical way.

Figure 3B is an enlarged scale of a part of Figure 3A.

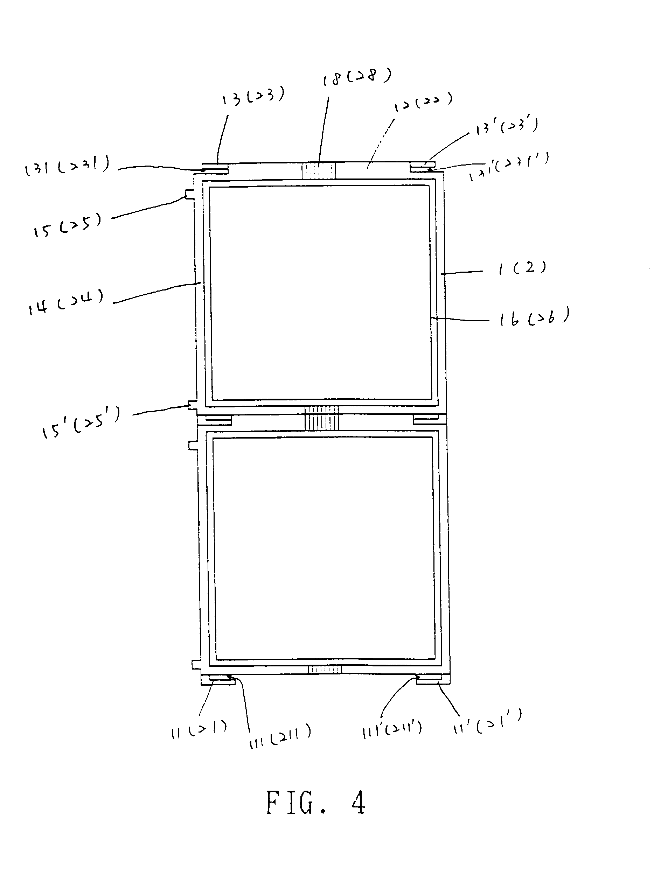

Figure 4 is a sectional view showing two rectangular hollow box horizontally connected together.

Figure 5A shows an alternate form of the present invention.

Figure 5B is an enlarged view of a part of Figure 5A.

Figure 6 is a sectional view showing two rectangular hollow boxes of the alternate form of the present invention horizontally connected together.

Figure 7A shows another alternate form of the present invention.

Figure 7B is an enlarged view of a part of Figure 7A.

Figure 8A shows still another alternate form of the present invention.

Figure 8B is an enlarged view of a part of Figure 8A.

### DETAILED DESCRIPTION OF THE PREFERRED EMBODIMENT

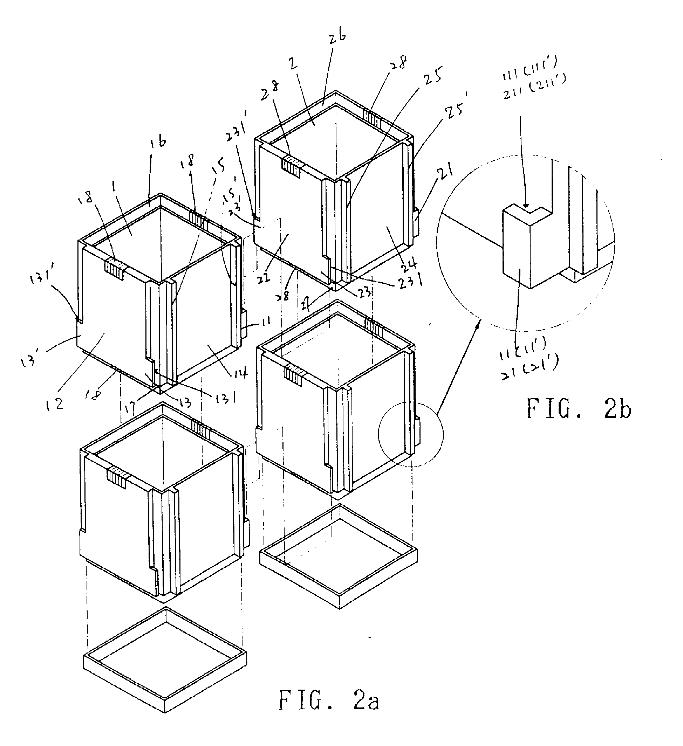

Referring to Figures 2A and 2B, a combination aquarium is comprised of a plurality of rectangular hollow boxes **1** and **2** that can be vertically connected in a stack, or horizontally connected in a line. The hollow boxes **1** and **2** each comprise two coupling elements, for example, hooked blocks **11** and **11'; 21** and **21**' bilaterally disposed at one lateral side near the bottom and defining a respective coupling hole **111** and **111';211** and **211**', a flat coupling block **12;22** disposed at an opposite lateral side, the flat coupling block **12;22** having two coupling flanges **13** and **13';23** and **23'** bilaterally disposed at the bottom and defining a respective coupling hole **131** or **131';231** or **231**', two bumpers **15** and **15';25** and **25**' arranged in parallel at a front side for the mounting of apparatus used in the combination aquarium, a top coupling groove **16;26** at the top open side, a bottom coupling flange **17** at the bottom side.

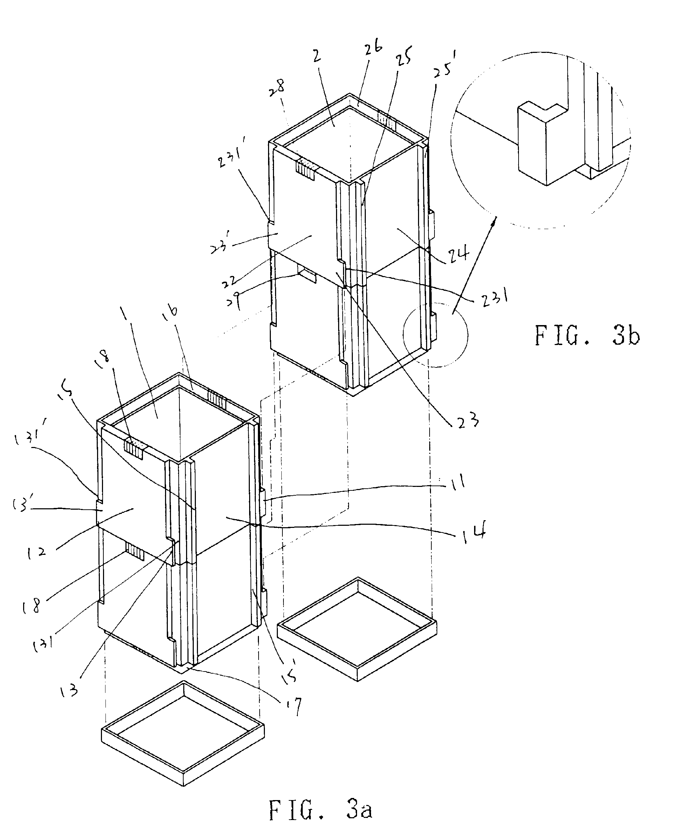

Referring to Figures **3A. 3B**, and **4**, the rectangular hollow boxes **1** and **2** can be vertically connected in a stack by engaging the bottom coupling flange **17** or **27** at one rectangular hollow box **1** or **2** into the top coupling groove **16** or **26** at another rectangular hollow box **1** or **2**, or horizontally connected in a line by coupling the coupling flanges **13** and **13';23** and **23**' at one rectangular hollow box **1** or **2** to the hooked blocks **11** and **11'; 21** and **21**' at another rectangular hollow box **1** or **2**, enabling the respective coupling flanges **13** and **13';23** and **23'** to be engaged into the respective coupling hole **111** and **111';211** and **211'**. and the respective hooked blocks **11** and **11'; 21** and **21**' to be engaged into the respective coupling hole **131** and **131';231** and **231**'.

Referring to Figures **2A** and **3A** again, top and bottom notches **19** and **29** (the top notches **19** are not shown) are respectively provided at the rectangular hollow boxes **1** and **2**, and fitting members **18** and **28** are respectively fastened to the rectangular hollow boxes **1** and **2** to close the notches **19** and **29**. When two rectangular hollow boxes **1** and **2** are horizontally connected together, the two adjacent fitting members **18** and **28** at the top side can be removed from the respective top notches **19** and **29**, enabling water to flow between the rectangular hollow boxes **1** and **2** through the top notches **19** and **29.**

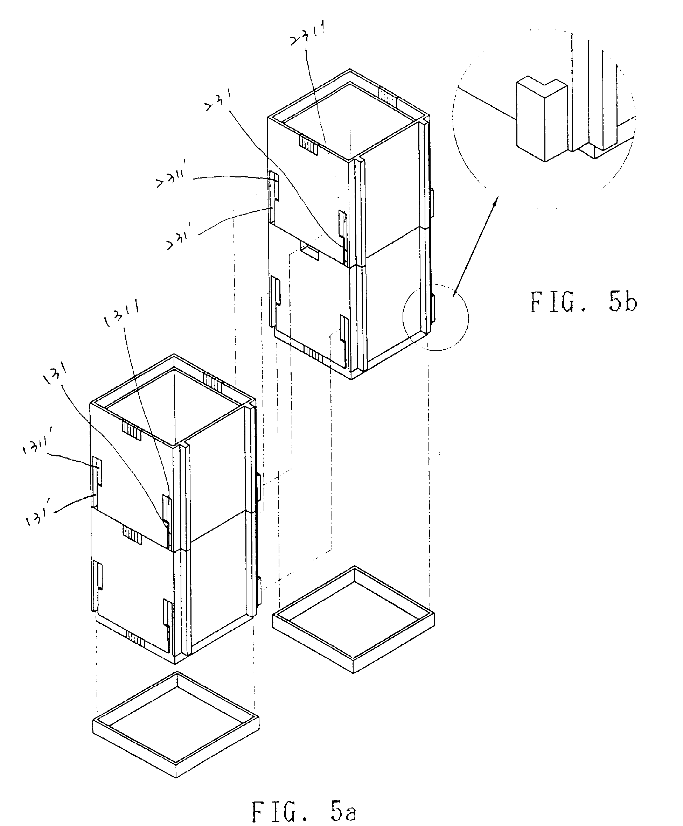

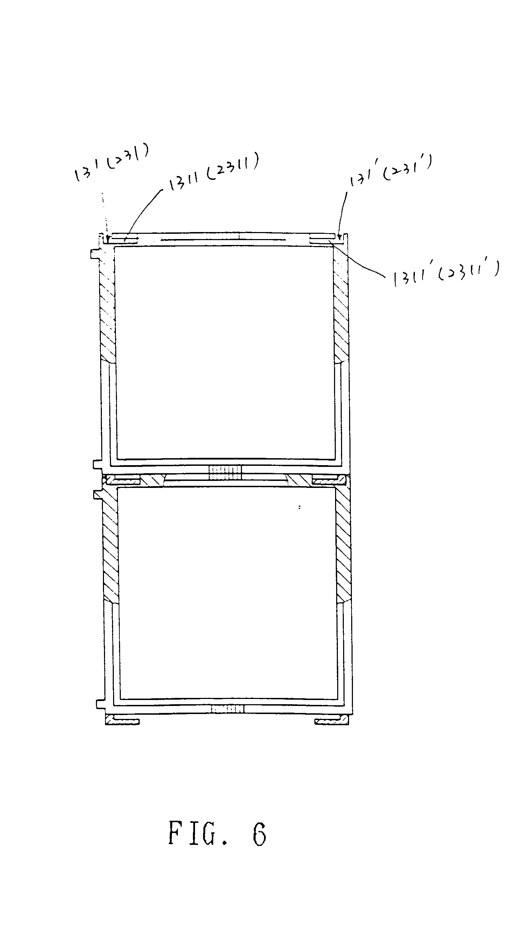

Figures 5A, 5B and 6 show an alternate form of the present invention. This alternate form eliminates the aforesaid flat coupling blocks **12;22,** and the coupling flanges **13** and **13';23** and **23**' are directly formed integral with the respective the peripheral wall of the respective rectangular hollow boxes **1** and **2**. By making respective coupling holes **131** and **131';231** and **231'** at the rectangular hollow boxes **1** and **2**, the respective coupling flanges **13** and **13'; 23** and **23**' are formed.

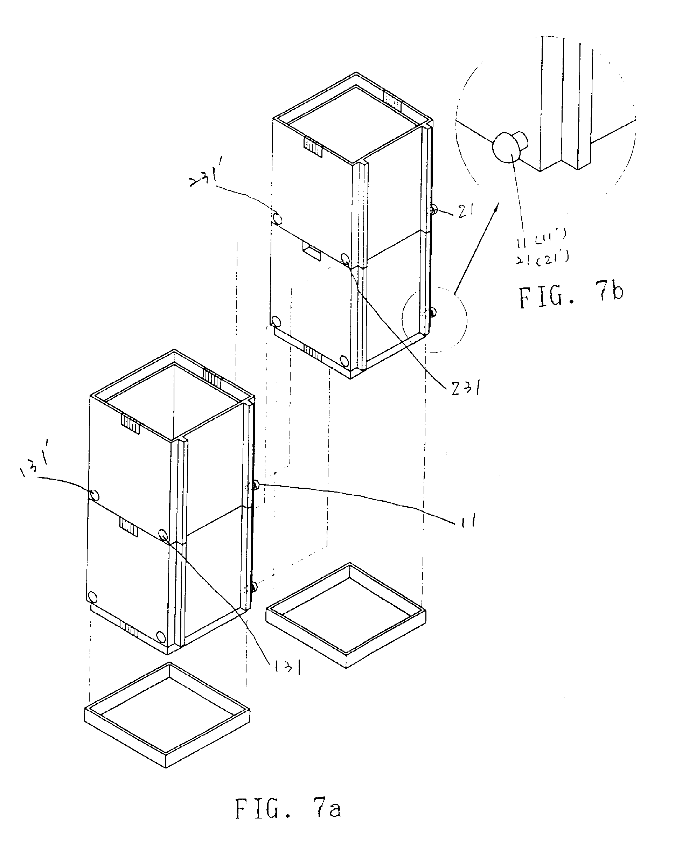

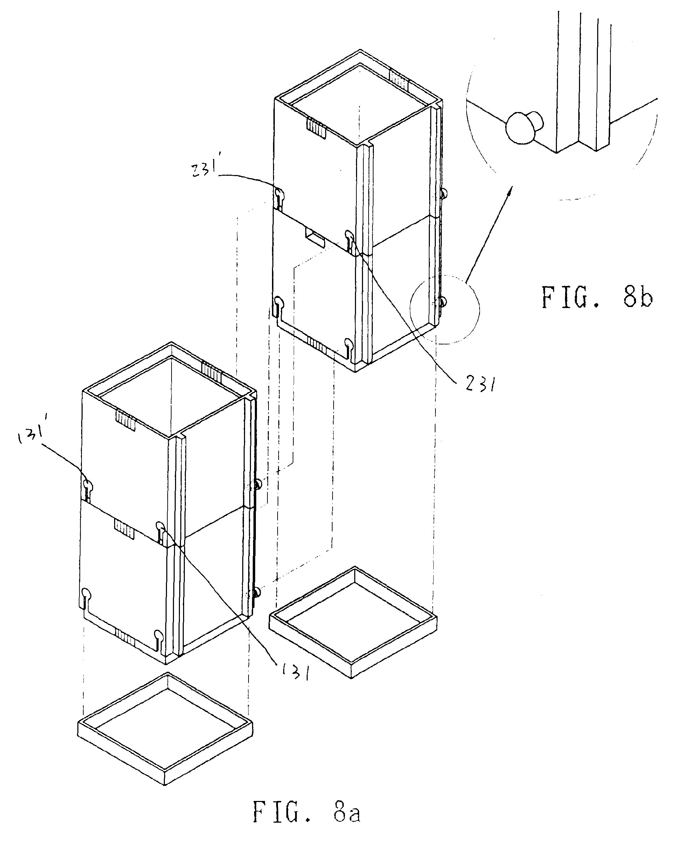

Figures 7A, 7B. 8A and 8B show another alternate form of the present invention. According to this alternate form, the coupling elements **11** and **11';21** and **21**' are shaped like a round head bolt, and the coupling holes **131** and **131';231** and **231**' can be rounded holes (see Figure 7A) or keyway-like holes (See Figure 8A) for receiving the respective round head bolts 11 and 11';21 and **21**'.

It is to be understood that the drawings are designed for purposes of illustration only, and are not intended as a definition of the limits and scope of the invention disclosed.

The features disclosed in the foregoing description, in the claims and/or in the accompanying drawings may, both separately and in any combination thereof, be material for realising the invention in diverse forms thereof.

## Claims

1. A combination aquarium comprising a plurality of hollow boxes, said hollow boxes each comprising two coupling elements bilaterally disposed at one lateral side, two coupling holes bilaterally disposed at an opposite lateral side, two bumpers arranged in parallel at a front side, a top coupling groove at a top side, and a bottom coupling flange at a bottom side, wherein said rectangular hollow boxes are vertically connected in a stack by engaging the bottom coupling flange at one rectangular hollow box into the top coupling groove at another, or horizontally connected in a line by engaging the coupling elements at one rectangular hollow box into the coupling holes at another.

2. The combination aquarium of claim 1 wherein said rectangular hollow boxes each having at least two notches at two opposite lateral sides for enabling water to flow from one of horizontally connected rectangular hollow boxes to another, and cap means for closing on said notches to stop water from passing through.

3. The combination aquarium of claim 1 wherein said coupling elements are hooked blocks fitting said coupling holes.

4. The combination aquarium of claim 1 wherein said coupling elements are round head bolts fitting said coupling holes.
